# EUROPÄISCHE PATENTSCHRIFT

(11) **EP 4 228 957 B1**
(45) Veröffentlichungstag und Bekanntmachung des Hinweises auf die Patenterteilung: **15.05.2024**
(21) Anmeldenummer: 21790443.2
(22) Anmeldetag: 12.10.2021
(51) Int. Cl.: B62H 5/00, B62J 43/13, B62J 43/23, B62J 43/28

(54) **VERRIEGELUNGSSYSTEM ZUR VERRIEGELUNG EINER ENERGIEVERSORGUNGSEINHEIT AN EINEM FAHRRAD**
LOCKING SYSTEM FOR LOCKING AN ENERGY SUPPLY UNIT TO A BICYCLE
SYSTÈME DE VERROUILLAGE POUR VERROUILLER UNE UNITÉ D'ALIMENTATION À UNE BICYCLETTE

(30) Priorität: 15.10.2020 DE 102020213036
(43) Veröffentlichungstag der Anmeldung: 23.08.2023
(73) Patentinhaber: Brose Antriebstechnik GmbH & Co. Kommanditgesellschaft, Berlin, 10553 Berlin (DE)
(72) Erfinder: HEINZ, Markus, 13597 Berlin (DE); BOCK, Michael, 13587 Berlin (DE)
(74) Vertreter: Maikowski & Ninnemann Patentanwälte Partnerschaft mbB
(86) Internationale Anmeldenummer: PCT/EP2021/078083
(87) Internationale Veröffentlichungsnummer: WO 2022/078973

(56) Entgegenhaltungen:
- EP-A1- 3 491 685
- EP-A1- 3 556 646
- CN-U- 208 056 874
- TW-U- M 583 826

## Beschreibung

Die vorgeschlagene Lösung betrifft ein Verriegelungssystem mit einer Verriegelungseinrichtung für ein Fahrrad.

Verriegelungseinrichtungen zur Verriegelung einer Energieversorgungseinheit, zum Beispiel mit einem Akkumulator (kurz: Akku), sind im Zusammenhang mit Fahrrädern weithin bekannt. Insbesondere im Zusammenhang mit Elektrofahrrädern, insbesondere sogenannten Pedelecs, wird zur Versorgung eines oder mehrerer Elektromotoren des Fahrrads für den elektromotorisch unterstützten Antrieb des Fahrrads eine Energieversorgungseinheit benötigt. Die Energieversorgungseinheit ist hierbei dann beispielsweise an einem Halteelement des Fahrradrahmens als Teil der Verriegelungseinrichtung festzulegen, kann bei geöffneter Verriegelungseinrichtung aber entfernt werden, beispielsweise um einen Akku der Energieversorgungseinheit aufzuladen.

Typischerweise sind Energieversorgungseinheiten für Elektrofahrräder mit einem Akku an einem Unterrohr als Halteteil über ein Schloss einer Verriegelungseinrichtung gesichert. Um bei einer Entriegelung des Schlosses ein Herausfallen oder Abfallen der Energieversorgungseinheit von dem Fahrradrahmen zu verhindern, ist dann häufig eine zweistufige Entriegelung vorgesehen. Die Verriegelungseinrichtung ist hierfür eingerichtet, die Energieversorgungseinheit nicht nur an dem Halteteil in einer Verriegelungsposition zu verriegeln, sondern auch für eine Trennung der Energieversorgungseinheit von dem Halteteil eine Verlagerung der Energieversorgungseinheit aus der Verriegelungsposition in eine Entnahmeposition fungierende Zwischenposition zu gestatten, in der die Energieversorgungseinheit weiterhin über mindestens ein Verriegelungselement der Verriegelungseinrichtung an dem Halteteil gehalten ist, und die in der Zwischenposition befindliche Energieversorgungseinheit freizugeben, wenn die Energieversorgungseinheit tatsächlich von dem Halteteil getrennt werden soll.

Eine derartige Verriegelungseinrichtung ist beispielsweise aus der DE 20 2016 104 156 U1 bekannt. Die hier vorgeschlagene Verriegelungseinrichtung umfasst ein Schloss, über das eine Energieversorgungseinheit mit einem Akku in einer Verriegelungsposition verriegelt werden kann. Wird das Schloss geöffnet, kann die Energieversorgungseinheiten bis zu einer Zwischenposition geschwenkt werden, wobei über ein Verriegelungselement in Form eines federnd gelagerten Sperrriegels ein vollständiges Herausklappen der Energieversorgungseinheit verhindert ist. Erst durch Verstellung des Verriegelungselements kann dann die Energieversorgungseinheit vollständig entfernt werden. Zum Trennen der Energieversorgungseinheit von dem rahmenseitigen Halteteil, zum Beispiel in Form eines Unterrohres, muss ein Nutzer folglich sowohl das Schloss als auch das Verriegelungselement betätigen, wodurch eine zweistufige Entriegelung bereitgestellt ist.

Weitere Verriegelungseinrichtungen zur Verriegelung einer Energieversorgungseinheit an einem Fahrrad sind in den Dokumenten EP 3 556 646 A1, EP 3 491 685 A1, TW M 583 826 U und CN 208 056 874 U beschrieben.

Dokument EP 3 556 646 A1 zeigt die Präambel des Anspruchs 1.

Die bisher bekannten Lösungen sind dabei wenig intuitiv, da für jede einzelne Stufe der Entriegelung ein gesonderter Mechanismus durch eine Person betätigt werden muss. Vor diesem Hintergrund liegt der vorgeschlagenen Lösung die Aufgabe zugrunde, ein in dieser Hinsicht verbessertes Verriegelungssystem bereitzustellen.

Diese Aufgabe ist mit einem Verriegelungssystem des Anspruchs 1 gelöst.

Ein vorgeschlagenes Verriegelungssystem für ein Fahrrad umfasst hierbei wenigstens ein Halteteil, eine Energieversorgungseinheit und eine Verriegelungseinrichtung zur Verriegelung der Energieversorgungseinheit in einer Verriegelungsposition an dem Halteteil. Die Verriegelungseinrichtung ist hierbei eingerichtet, eine Verlagerung der Energieversorgungseinheit an dem Halteteil aus der Verriegelungsposition in eine Entnahmeposition zu gestatten, in der die Energieversorgungseinheit von dem Halteteil entnehmbar ist. Ferner ist die Verriegelungseinrichtung eingerichtet, die aus der Verriegelungsposition verlagerte Energieversorgungseinheit in der Entnahmeposition zu halten, wobei die Verriegelungseinrichtung hierfür wenigstens ein Arretierelement mit wenigstens einer Reibfläche aufweist. Die wenigstens eine Reibfläche des wenigstens einen Arretierelements ist für eine Arretierung der Energieversorgungseinheit in der Entnahmeposition durch einen Kraftschluss vorgesehen.

Grundgedanke der vorgeschlagenen Lösung ist somit, auf Basis eines zweistufigen Entnahmekonzepts die Entnahme einer Energieversorgungseinheit, d.h., insbesondere das Entfernen der Energieentsorgungseinheit von dem Halteteil, für eine Person intuitiver handhabbar und weniger aufwendig zu gestalten. Indem die Energieversorgungseinheit nach dem Lösen einer Verriegelung lediglich über einen Kraftschluss in einer definierten Entnahmeposition gehalten wird, lässt sich eine Entnahme der Energieversorgungseinheit derart vorgeben, dass durch einen Nutzer lediglich eine ausreichend große Entnahmekraft auf die in der Entnahmeposition vorliegende Energieversorgungseinheit aufgebracht werden muss, um den Kraftschluss zu lösen und die Energieversorgungseinheit entnehmen zu können. Nach dem Lösen einer Verriegelung verlagert sich somit beispielsweise die Energieversorgungseinheit unter Wirkung einer an der Energieversorgungseinheit angreifenden Gewichtskraft - gegebenenfalls unterstützt durch mindestens ein Federelement - in die Entnahmeposition. Beispielsweise wird hierbei die Energieversorgungseinheit um eine halteteilfeste Gelenksachse aus einer Aufnahme des Halteteils herausgeklappt. In der eingenommenen Entnahmeposition ist die Energieversorgungseinheit dann durch einen Kraftschluss über das wenigstens eine Arretierelement gehalten, sodass ein Nutzer lediglich noch an der Energieversorgungseinheit mit ausreichend großer Kraft angreifen muss, um die Energieversorgungseinheit von dem Halteteil zu lösen, beispielsweise indem ein Nutzer auf die Energieversorgungseinheit mit ausreichend großer (Entnahme- ) Kraft drückt oder hieran zieht.

In einer Ausführungsvariante kann an der Energieversorgungseinheit mindestens ein zusätzlicher Vibrationsdämpfer vorgesehen sein, der sich beim Überführen der Energieversorgungseinheit in die Entnahmeposition entspannt und damit eine (weitere) Verlagerung unter Wirkung der Gewichtskraft unterstützt.

In einer Ausführungsvariante ist an der Energieversorgungseinheit wenigstens eine Gegenfläche zur kraftschlüssigen Anlage an der wenigstens einen Reibfläche in der Entnahmeposition vorgesehen. So kann dann beispielsweise an einer der Reibfläche zugewandten Stirnseite der Energieversorgungseinheit wenigstens eine Gegenfläche vorgesehen sein, die an der arretierelementseitigen Reibfläche (oder mehreren arretierelementseitigen Reibflächen) kraftschlüssig anliegt, wenn die Energieversorgungseinheit ihre Entnahmeposition einnimmt. Grundsätzlich kann die wenigstens eine Gegenfläche hierbei zumindest teilweise an der Reibfläche entlang geführt werden, wenn die Energieversorgungseinheit aus der Verriegelungsposition in die Entnahmeposition verlagert wird. Die wenigstens eine Gegenfläche und die wenigstens eine Reibfläche sind hierbei folglich derart zueinander angeordnet und ausgebildet, dass die Gegenfläche zumindest über einen Teil eines Verlagerungsweges, den die Energieversorgungseinheit ausgehend von der Verriegelungsposition bis in die Entnahmeposition überbrückt, an der - im Zusammenspiel mit der Gegenfläche in der Entnahmeposition arretierend wirkenden - Reibfläche entlang geführt wird. Dieses Entlangführen kann insbesondere einschließen, dass die wenigstens eine Gegenfläche der Energieversorgungseinheit in dieser Phase im Kontakt mit der Reibfläche steht und hieran unter Gleitreibungsbedingungen anliegt.

Grundsätzlich kann über einen Kontakt zwischen der wenigstens einen Reibfläche und der wenigstens einen Gegenfläche in der Entnahmeposition eine Haftreibungskraft aufbringbar sein, die größer ist als eine auf die Energieversorgungseinheit wirkende Gewichtskraft, unter deren Wirkung die Energieversorgungseinheit, bei durch die Verriegelungseinrichtung gelöster Verriegelung, aus der Verriegelungsposition in die Entnahmeposition verlagerbar ist. Die wenigstens eine Reibfläche und die wenigstens eine Gegenfläche sind folglich eingerichtet, eine Haftreibungskraft für die Einnahme der Entnahmeposition durch die Energieversorgungseinheit aufzubringen, die einer (weiteren) Verlagerung der Energieversorgungseinheit unter der an ihr angreifenden Gewichtskraft entgegenwirkt und damit die Energieversorgungseinheit in einer zu der Verriegelungsposition unterschiedlichen Entnahmeposition hält. In dieser Entnahmeposition kann dann beispielsweise eine Person an der Energieversorgungseinheit leichter manuell angreifen als in der Verriegelungsposition, um die Energieversorgungseinheit durch Ziehen relativ zu dem Halteteil zu verlagern und schließlich von dem Halteteil zu trennen.

In einer Ausführungsvariante würde somit beispielsweise wenigstens ein Schlossbolzen der Verriegelungseinrichtung verstellt, um eine Verriegelung der Energieversorgungseinheit an dem Halteteil zu lösen. Zum Beispiel wird hierfür ein Schlossbolzen parallel zu einer Längsachse der Energieversorgungseinheit verstellt. Indem die Energieversorgungseinheit in einer nach unten hin offenen Aufnahme des Halteteils untergebracht ist, kann bei einer derart gelösten Verriegelung die Energieversorgungseinheit aus der Aufnahme heraus klappen (wenn die Energieversorgungseinheit mit einem Ende noch an dem Halteteil angelenkt ist). Über eine reibende Anlage wenigstens einer Gegenfläche der Energieversorgungseinheit an der wenigstens eine Reibfläche des Arretierelements wird hierbei die Verlagerungsbewegung der Energieversorgungseinheit relativ zu dem Halteteil abgebremst und schlussendlich gestoppt. Die sich ergebende Haftreibung führt hierbei dann zu einem Kraftschluss, der die Energieversorgungseinheit in einer Entnahmeposition hält, in der die Energieversorgungseinheit zumindest teilweise aus der Aufnahme des Halteteils vorsteht. In dieser Entnahmeposition kann die Energieversorgungseinheit leichter von einer Person von dem Halteteil getrennt werden, nämlich unter Lösen des Kraftschlusses an der wenigstens einen Reibfläche des Arretierelements.

Wie bereits erläutert, kann die Größe der Haftreibungskraft derart vorgegeben und insbesondere eingestellt sein, dass eine Person durch eine manuell aufgebrachte Entnahmekraft auf die Energieversorgungseinheit den Kraftschluss zwischen der wenigstens einen Freifläche und der wenigstens einen Gegenfläche lösen und die Energieversorgungseinheit zum Entfernen von dem Halteteil verlagern kann. Diese Verlagerung in Reaktion auf die manuell aufgebrachte Entnahmekraft kann hierbei insbesondere eine Weiterverlagerung der Energieversorgungseinheit gerade in diejenige (Raum-) Richtung einschließen, entlang der die Energieversorgungseinheit aus der Verriegelungsposition in die Entnahmeposition verlagerbar ist.

In einer möglichen Weiterbildung kann zudem vorgesehen sein, dass die Energieversorgungseinheit wieder durch einen erzeugten Kraftschluss an dem Halteteil gehalten wird, wenn die Energieversorgungseinheit durch einen Nutzer lediglich um ein definiertes Maß aus der Entnahmeposition verlagert wurde und der Nutzer die Energieversorgungseinheit wieder loslässt, also die Energieversorgungseinheit noch nicht zu weit, d.h., bis über einen bestimmten Kontaktpunkt hinaus, relativ zu dem Halteteil verlagert hat. Über das wenigstens eine Arretierelement der Verriegelungseinrichtung kann die Energieversorgungseinheit folglich in dieser Variante zusätzlich zu der einen (primäre) Entnahmeposition noch in wenigstens einer weiteren (sekundären) Entnahmeposition oder Halteposition an dem Halteteil gehalten werden.

In einer Ausführungsvariante sind die wenigstens eine Gegenfläche und die wenigstens eine Reibfläche derart zueinander angeordnet und ausgebildet, dass eine durch den Kontakt zwischen der wenigstens einen Reibfläche und der wenigstens einen Gegenfläche erzeugte (Gleit-) Reibung zumindest über einen Teil des mit einer Verlagerungsbewegung der Energieversorgungseinheit überbrückten Verstellwegs vor dem Erreichen der Entnahmeposition ansteigt. Wenigstens über einen Teil des zurückgelegten Verlagerungswegs liegen somit die Gegenfläche und die Reibfläche untere Gleitreibungsbedingungen aneinander an. Eine hierbei entstehende Reibungskraft steigt dabei an, um die Verlagerungsbewegung der Energieversorgungseinheit abzubremsen und in der Entnahmeposition endgültig zu stoppen. In dieser Entnahmeposition ist dann die Energieversorgungseinheit über die unter Haftreibungsbedingungen aneinander anliegenden Gegen- und Reibflächen arretiert.

Für die Erzeugung einer ansteigenden Reibung zwischen der wenigstens einen Gegenfläche und der wenigstens einen Reibfläche kann beispielsweise eine rampenartig verlaufende Kontur der Reibfläche und/oder der Gegenfläche vorgesehen sein.

Alternativ oder ergänzend kann eine über den Verlauf der Verlagerungsbewegung der Energieversorgungseinheit lediglich vor dem Erreichen der Entnahmeposition ansteigende Reibung über eine lokal begrenzt ausgebildete Gegenfläche und/oder über eine lokal veränderte Materialpaarung erreicht sein. So tritt beispielsweise eine Gegenfläche erst gegen Ende einer Verlagerungsbewegung der Energieversorgungseinheit mit einer arretierelementseitigen Reibfläche in reibenden Kontakt, wobei über diesen Kontakt unmittelbar die Abbremsung der Energieversorgungseinheit erfolgt. Alternativ oder ergänzend kann wenigstens eine geänderte Materialpaarung vor dem Erreichen der Entnahmeposition vorgesehen sein, die einen erhöhten Reibungskoeffizienten mit sich bringt, um die Verlagerungsbewegung der Energieversorgungseinheit zu stoppen und die Energieversorgungseinheit in der Entnahmeposition zu arretieren. Hierfür können beispielsweise Reibbeläge aus unterschiedlichen Materialien vorgesehen werden.

In einer Ausführungsvariante ist ein drehbar gelagertes Arretierelement vorgesehen, wobei die Gegenfläche der Energieversorgungseinheit unter Drehung des Arretierelements an wenigstens einem Teil der Reibfläche eines derartigen drehbar gelagerten Arretierelements abrollen kann, wenn sich die Energieversorgungseinheit in Richtung der Entnahmeposition verlagert.

Bei einem drehbar gelagerten Arretierelement lässt sich die Entnahmeposition beispielsweise durch eine Einschränkung der Drehbarkeit des Arretierelements vorgeben. So ist das Arretierelement beispielsweise ab einer bestimmten Drehlage gegen eine weitere Drehung blockiert. In diesem Zusammenhang kann insbesondere vorgesehen sein, dass das Arretierelement nur um einen definierten Drehwinkelbetrag drehbar ist, der die Entnahmeposition bestimmt. So können Anfangs- und Endwerte eines Drehwinkelbereichs für das drehbare Arretierelement vorgegeben sein, wobei der Anfangswert mit der Verriegelungsposition der Energieversorgungseinheit und der Endwert mit der (eingestellten) Entnahmeposition korrespondieren und eine Verlagerung der Energieversorgungseinheit zwischen der Verriegelungsposition und der Entnahmeposition nur unter Drehung des Arretierelements möglich ist. Das drehbare Arretierelement kann dementsprechend so lange im Kontakt mit der Gegenfläche der Energieversorgungseinheit mit gedreht werden, bis die Energieversorgungseinheit in der gewünschten Entnahmeposition vorliegt. In dieser Entnahmeposition ist eine weitere Drehung des Arretierelements blockiert, sodass das blockierte Arretierelement über die kraftschlüssige Anlage seiner Reibfläche an der Gegenfläche der Energieversorgungseinheit einer weiteren Verlagerung der Energieversorgungseinheit entgegenwirkt. Für eine Entnahme der Energieversorgungseinheit wird dann beispielsweise durch manuelles Aufbringen einer Entnahmekraft, wenigstens kurzzeitig, die wenigstens eine Gegenfläche an der wenigstens einen Reibfläche des blockierten Arretierelements (unter Gleitreibungsbedingungen) entlang verlagert.

Wird die Energieversorgungseinheit wieder umgekehrt an das Halteteil angesetzt, lässt sich die Energieversorgungseinheit unter Drehung des Arretierelements in einer entgegengesetzte Drehrichtung wieder aus der Entnahmeposition in die Verriegelungsposition überführen.

Das Arretierelement der Verriegelungseinrichtung kann gegen die in der Verriegelungsposition und/oder gegen die in der Entnahmeposition vorliegende Energieversorgungseinheit elastisch vorgespannt sein. Wenn die Energieversorgungseinheit in ihrer Verriegelungsposition vorliegt, kann über eine elastische Vorspannung des Arretierelements eine Spannkraft auf die Energieversorgungseinheit ausgeübt werden. Über eine solche Spannkraft, ist die Fixierung der Energieversorgungseinheit in der Verriegelungsposition verbessert. Beispielsweise ist hierüber die Energieversorgungseinheit auch bei im Betrieb auftretenden Stößen besser gegen eine unerwünschte Verlagerung gesichert. Über die ausgeübte Spannkraft lässt sich somit beispielsweise eine stabile und vibrationsarme Fixierung der Energieversorgungseinheit in ihrer Verriegelungsposition an dem Halteteil erreichen.

Über eine elastische Vorspannung des Arretierelements in Richtung der in der Entnahmeposition vorliegenden Energieversorgungseinheit lässt sich beispielsweise die Größe einer Haftreibungskraft einstellen. Insbesondere kann hierüber die Haftreibungskraft auch bei der Montage oder später im Rahmen einer Wartung nachjustierbar sein. Die Vorspannung des Arretierelements kann hierfür einstellbar sein, beispielsweise mithilfe wenigstens eines Spannelements. In einer Ausführungsvariante ist beispielsweise eine Spannschraube als Spannelement vorgesehen, um eine über mindestens eine Druckfeder definierte Vorspannung auf ein Arretierelement einstellen zu können. Grundsätzlich kann die elastische Vorspannung des Arretierelements auch nutzerspezifisch einstellbar sein, um den Bedienkomfort zu erhöhen. So kann in Abhängigkeit des jeweiligen Nutzers eine andere Größe der Haftreibung eingestellt werden, sodass der jeweilige Nutzer ohne größere Anstrengung die Haftreibung durch Ziehen oder Drücken an der in der Entnahmeposition vorliegenden Energieversorgungseinheit die Haftreibung überwinden und die Energieversorgungseinheit entnehmen kann. Ebenso kann über die Einstellung der Vorspannung einstellbar sein, wie weit die Entnahmeposition von der Verriegelungsposition entfernt ist respektive welchen Verlagerungsweg die Energieversorgungseinheit aus der Verriegelungsposition überbrückt, bis die Energieversorgungseinheit über die anliegende Reibkraft in der Entnahmeposition gestoppt wird.

Im Rahmen der vorgeschlagenen Lösung ist auch ein Fahrradrahmen für ein Fahrrad, insbesondere ein Elektrofahrrad vorgesehen, der ein Ausführungsbeispiel eines vorgeschlagenen Verriegelungssystems aufweist. Ein Halteteil wird hierbei beispielsweise durch ein Unterrohr des Fahrradrahmens gebildet. Ein solches Unterrohr weist dann eine Aufnahme für die zumindest teilweise Unterbringung der Energieversorgungseinheit in der Verriegelungsposition auf.

Darüber hinaus ist ein Elektrofahrrad mit einer Ausführungsvariante eines vorgeschlagenen Verriegelungssystems vorgesehen.

Die beigefügten Figuren veranschaulichen exemplarisch mögliche Ausführungsvarianten der vorgeschlagenen Lösung.

Hierbei zeigen:
- Figur 1: in perspektivischer Ansicht eine Energieversorgungseinheit für eine Ausführungsvariante eines vorgeschlagenen Verriegelungssystems mit Blick auf eine Stirnseite, an der eine Öffnung für einen Schlossbolzen einer Verriegelungsvorrichtung sowie Gegenflächen für eine kraftschlüssige Arretierung in einer Entnahmeposition vorgesehen sind;
- Figur 2: in Einzeldarstellung eine Akkukappe der Energieversorgungseinheit der Figur 1 mit Blick auf die Stirnseite;
- Figuren 3A-3B: ausschnittsweise und in geschnittener Ansicht die Energieversorgungseinheit der Figur 1 in einer Verriegelungsposition (Figur 3A) und in einer Entnahmeposition (Figur 3B), mit einem federelastisch vorgespannten Arretierelement, das eine in der Entnahmeposition kraftschlüssig an der Stirnseite der Energieversorgungseinheit anliegende Reibfläche aufweist;
- Figur 4: ausschnittsweise und in Seitenansicht eine Weiterbildung eines Verriegelungssystems der Figuren 3A und 3B mit einem alternativ ausgestalteten Arretierelement einer zugehörigen Verriegelungseinrichtung;
- Figur 5: ausschnittsweise und in geschnittener Darstellung einen Teil einer Verriegelungseinrichtung der Figur 4 mit dem Arretierelement;
- Figuren 6A-6B: ausschnittsweise und in ebenfalls geschnittener Darstellung eine weitere Ausführungsvariante eines vorgeschlagenen Verriegelungssystems, bei dem das Arretierelement durch ein begrenzt drehbares arretiert Rad oder ein inne begrenzt drehbare arretiert Rolle gebildet ist;
- Figur 7: in Seitenansicht einen Fahrradrahmen aus dem Stand der Technik, der ein Halteteil in Form eines Unterrohres mit hieran festgelegtem Akku aufweist, der in der Figur 7 in einer von einer Verriegelungseinrichtung bereits getrennten Lage dargestellt ist.

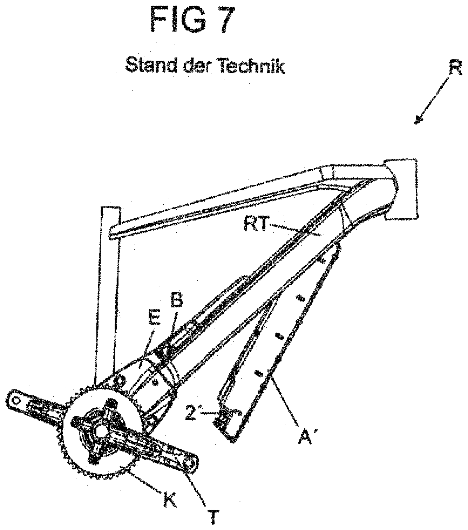

Die Figur 7 zeigt eine aus dem Stand der Technik bekannte Ausführung eines Fahrradrahmens R für ein Elektrofahrrad. Der Fahrradrahmen R weist mehrere miteinander verbundene Rahmenrohre auf, hierunter insbesondere ein Halteteil in Form eines Unterrohrs RT. Insbesondere an diesem Unterrohr RT ist ein Gehäuse eines Elektromotors E fixiert. Mit diesem Elektromotor E ist ein Kettenblatt K gekoppelt, das zusätzlich auch über eine Tretlagerkurbel T angetrieben werden kann.

Für die Versorgung des Elektromotors E mit elektrischer Energie ist eine Energieversorgungseinheit A` mit einem Akku vorgesehen. Der Akku ist gegebenenfalls mit weiteren elektronischen Komponenten innerhalb eines Gehäuses der Energieversorgungseinheit A' untergebracht. Im Folgenden wird der Einfachheit halber die Energieversorgungseinheit A' mit dem Akku gleichgesetzt.

Der Akku A' ist vorliegende an dem Unterrohr RT befestigt. Hierbei kann der längserstreckte Akku A' an einem von dem Elektromotor E abgewandten Ende des Unterrohrs RT in eine Aufnahme des Unterrohrs RT eingeschoben oder eingesteckt werden. Über das eingeschobene oder eingesteckte Ende des Akkus A' kann dann das vordere Ende des Akkus A' in die an der Unterseite des Rohres RT ausgebildete Aufnahme eingeklappt werden. An dem einzuklappenden Ende des Akkus A' kann ein akkuseitiger Steckverbinder 2' in Form eines Anschlusssteckers vorgesehen sein. Dieser akkuseitige Steckverbinder 2' ist dann an einem innerhalb der Aufnahme des Unterrohrs RT vorgesehenen motorseitigen Steckverbinder gesteckt, wenn der Akku A' bestimmungsgemäß vollständig in die Aufnahme des Unterrohres RT eingeklappt und hierin aufgenommen ist.

Zum Lösen des Akkus A' von dem Unterrohr RT ist an der Oberseite des Unterrohrs RT ein Betätigungsgriff B vorgesehen. Wird dieser Betätigungsgriff B betätigt, gibt eine an dem Unterrohr RT integrierte Verriegelungseinrichtung den Akku A' frei, sodass dieser nach unten, d. h. zum Boden hin, von einer Person heraus geklappt und entnommen werden kann.

Bei einer aus dem Stand der Technik bekannten Verriegelungseinrichtung, wie sie bei einem Fahrradrahmen R der Figur 7 zum Einsatz kommt, muss der Akku A' mit einer Hand gehalten werden, wenn der Betätigungsgriff B betätigt wird, um ein Herausfallen des Akkus A' aus dem Unterrohr RT zu verhindern. Dies reduziert den Bedienungskomfort bei einer Entnahme des Akkus A' erheblich. Im Übrigen ist die dargestellte Konstruktion nur bedingt für Elektrofahrräder geeignet, die ausdrücklich für Fahrten vorgesehen sind, bei denen der Fahrradrahmen R erheblichen Stößen ausgesetzt ist, wie zum Beispiel sogenannten Downhill-Fahrten bei Mountainbikes.

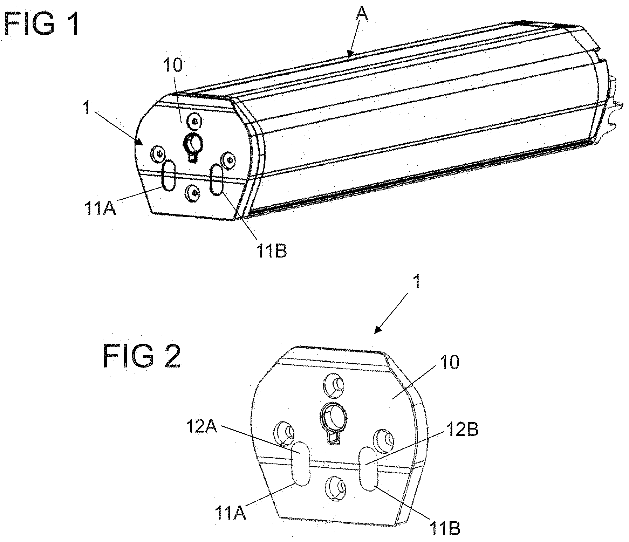

In dieser Hinsicht schafft die vorgeschlagene Lösung Abhilfe, zu der mit den Figuren 1 bis 6B Ausführungsvarianten näher veranschaulicht sind.

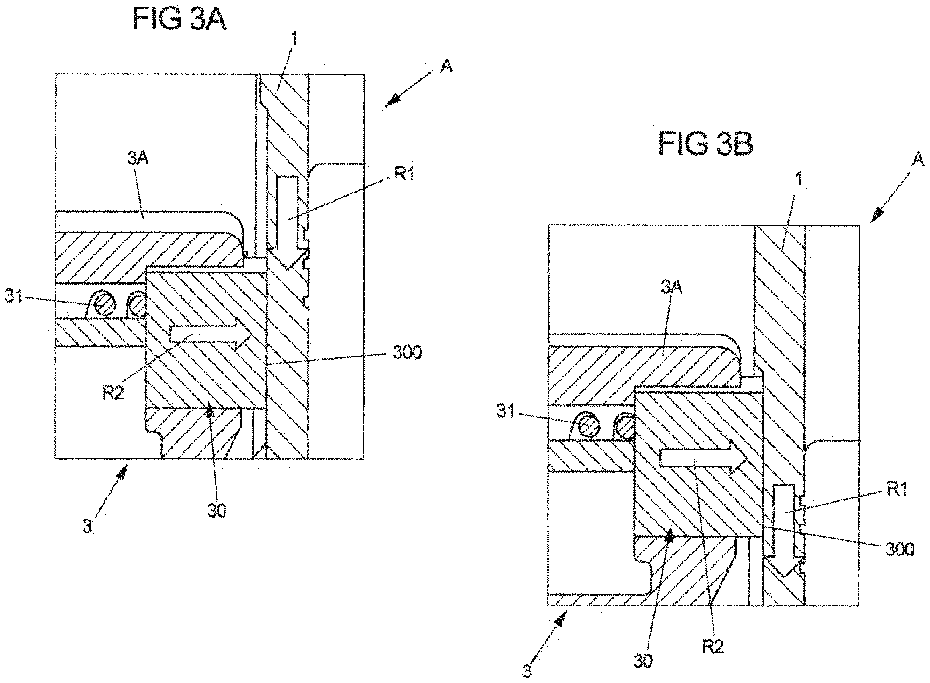

Die Figur 1 zeigt in perspektivischer Ansicht eine Energieversorgungseinheit in Form eines Akkus A für eine Ausführungsvariante eines vorgeschlagenen Verriegelungssystems. Der längserstreckte Akku A weist an einer Stirnseite eine Akkukappe 1 auf, die eine Stirnfläche 10 definiert. An dieser Stirnfläche 10 sind neben einer Öffnung für ein Schlossbolzen einer fahrradrahmenseitigen Verriegelungseinrichtung 3 (vgl. z.B. Figuren 3A und 3B) Aussparungen 11A und 11B für Reibflächen 12A und 12B vorgesehen, die in der Figur 2 näher veranschaulicht sind. Die Reibflächen 12A und 12B bilden Gegenflächen für eine kraftschlüssige Arretierung des Akkus A in einer Entnahmeposition an einem Unterrohr RT entsprechend der Figur 7, wenn eine Verriegelung des Akkus A gelöst wurde. Beispielsweise sind die Reibflächen 12A und 12B des Akkus A durch Reibbeläge gebildet, die in den Aussparungen 11A und 11B der Akkukappe 1 aufgenommen sind.

Wie anhand der Figuren 3A und 3B näher veranschaulicht ist, wirken die Gegenflächen 12A und 12B bei einer Anbringung des Akkus A der Figur 1 in einem Unterrohr RT mit einem Arretierelement - hier in Form eines Arretierblocks 30 - zusammen, um den Akku A bei gelöster Verriegelung in einer Entnahmeposition an dem Unterrohr RT arretiert zu halten. Hierbei ist der Arretierblock 30 in einem Gehäuseteil 3A des Unterrohrs RT aufgenommen und über ein Federelement in Form einer Druckfeder 31 elastisch in Richtung der Stirnfläche 10 des Akkus A vorgespannt, wenn der Akku A in seiner (in der Figur 3A ausschnittsweise veranschaulichten) Verriegelungsposition in dem Unterrohr RT vorliegt. Eine Reibfläche 300 des Arretierblocks 30 ist dabei der Stirnfläche 10 des Akkus A zugewandt.

Gegebenenfalls übt der elastisch vorgespannte Arretierblock 30 in der Verriegelungsposition des Akkus A bereits eine Spannkraft auf den Akku A aus. Diese Spannkraft wirkt entlang der Längsachse des Akkus A in einer Wirkrichtung R2 und hält den Akku A vibrationsarm innerhalb der Aufnahme des Unterrohrs RT.

Über die Druckfeder 31 ist der Arretierblock 30 ferner entlang der Wirkrichtung R2 in Richtung der Stirnfläche 10 elastisch vorgespannt, sodass der Akku A bei gelöster Entriegelung in einer nach unten geklappten Entnahmeposition arretiert bleibt, wenn der Akku A nicht mehr an dem Unterrohr RT verriegelt ist. Ist ein Schlossbolzen parallel zur Wirkrichtung R2 außer Eingriff mit der Bolzenöffnung des Akkus A gebracht, klappt folglich der Akku A unter Wirkung der an dem Akku A angreifenden Gewichtskraft nach unten um eine unterrohrseitige Gelenksachse an dem Ende des Akkus A, das zu der den Arretierblock 30 umfassenden Verriegelungseinrichtung 3 des Verriegelungssystems entfernt liegt. Das der Verriegelungseinrichtung 3 zugewandte Ende des Akkus A mit der Akkukappe 1 wird somit entlang der in den Figuren 3A und 3B dargestellten Verlagerungsrichtung R1 nach unten verlagert. Die Stirnseite 10 des Akkus A wird somit entlang der Reibfläche 300 des Arretierblocks 30 verstellt.

Indem die Stirnseite 10 und insbesondere die hieran vorgesehenen akkuseitigen Reibflächen 12A, 12B und/oder die Reibfläche 300 des Arretierblocks 300 eine rampenartige Kontur aufweisen, wird der Akku A unter ansteigender Gleitreibungskraft entlang der Verlagerungsrichtung R1 verstellt. Ist der Akku A um einen vorgegebenen Klapp- oder Schwenkwinkel nach unten aus dem Unterrohr RT ausgeklappt, ist die Gleitreibungskraft, die der Verlagerungsrichtung R1 entgegenwirkt, so weit angestiegen, dass eine weitere Verlagerung des Akkus A aufgrund der an dem Akku A angreifenden Gewichtskraft nicht mehr möglich ist und der Akku A an der Stirnfläche 10 über den Arretierblock 30 kraftschlüssig respektive reibschlüssig in einer dann eingenommenen Entnahmeposition arretiert ist. In der dann eingenommenen, nach unten geklappten Entnahmeposition verbleibt der Akku A folglich, ohne dass hierfür nach der Entriegelung ein besonderer Mechanismus von einer Person separat betätigt werden müsste.

Die Entnahme des Akkus A von dem Unterrohr RT ist dann ohne weiteres möglich, indem der Akku A unter Anwendung einer manuell aufgebrachten Entnahmekraft weiter in die Verlagerungsrichtung R1 gezogen wird. Eine Person muss folglich beispielsweise lediglich an dem der Verriegelungseinrichtung 3 zugewandten Ende des Akkus A nach unten ziehen, um die den Akku A in der Entnahmeposition arretierende Haftreibungskraft zu überwinden und einen mithilfe des Arretierblocks 30 bereitgestellten Kraftschluss zu lösen. Durch die federelastische Lagerung des Arretierblocks 30 kann dieser, bei ausreichend hoher Entnahmekraft auf den Akku A, entgegengesetzt zu der Wirkrichtung R2 verstellt werden. Der Akku A kann somit ausgehend von der Entnahmeposition vollständig von dem Unterrohr RT entnommen werden. Die über die Verriegelungseinrichtung 3 vorgeschlagene zweistufige Entnahme für den Akku A weist somit eine äußerst geringe Komplexität auf und kommt ohne separat nutzerseitig zu betätigende Mechanismen nach der Entriegelung des Akkus A aus.

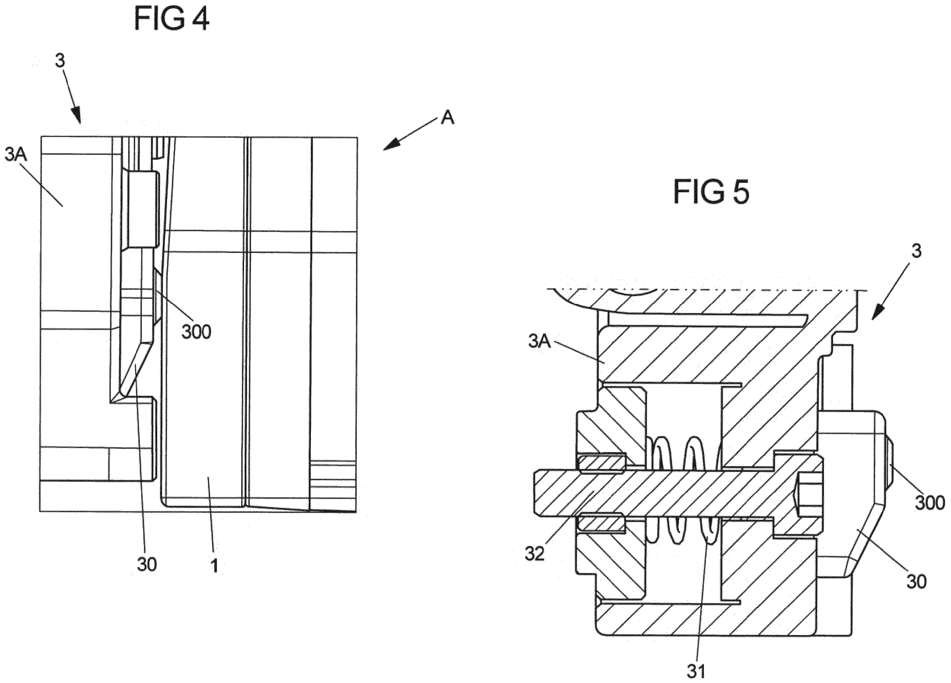

Bei der Weiterbildung der Figuren 4 und 5 ist die Vorspannkraft auf den Arretierblock 30 über ein Spannelement in Form einer Spannschraube 32 einstellbar. Die von der Druckfeder 31 auf den Arretierblock 30 aufgebrachte Federkraft in Wirkrichtung R2 ist somit bei der Montage einstellbar und im Betrieb auch nachjustierbar. Eine derartige Spannschraube 32 kann auch bei der Ausführungsvariante der Figuren 3A und 3B vorgesehen sein.

Zusätzlich ist bei der Ausführungsvariante der Figuren 4 und 5 nicht die komplette Stirnseite des Arretierblocks 30 mit einer Reibfläche 300 ausgebildet. Vielmehr ist hier an der Stirnseite lokal ein separater Reibbelag zur Bildung der Reibfläche 300 vorgesehen. Dieser Reibbelag für die Reibfläche 300 der Ausführungsvariante der Figuren 4 und 5 ist beispielsweise an der Stirnseite des Arretierblocks 30 geringfügig in Richtung des Akkus A vorstehend ausgeführt.

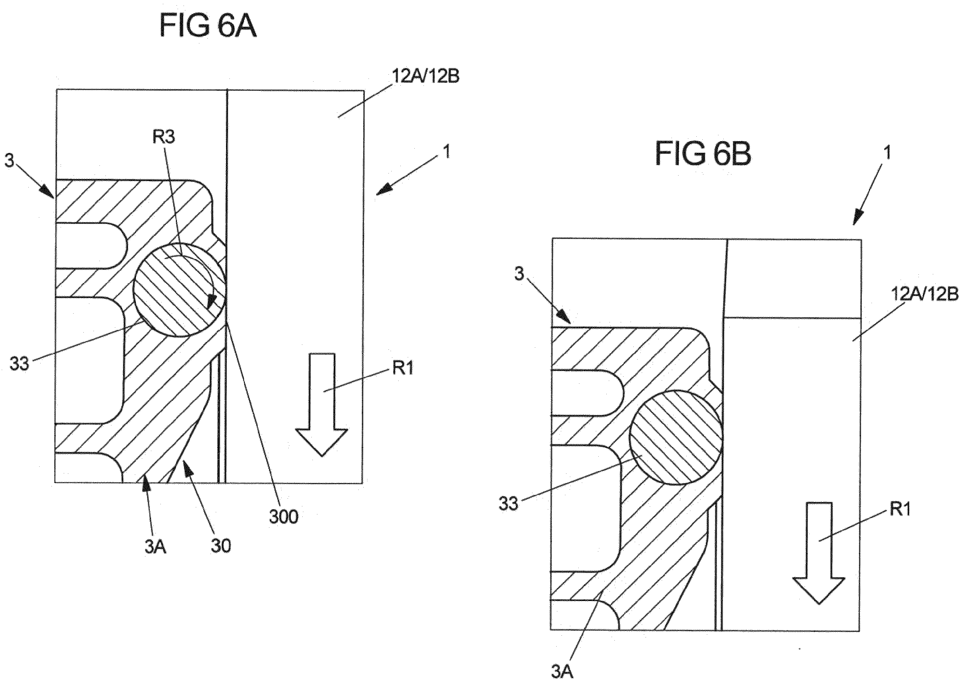

Bei der Ausführungsvariante der Figuren 6A und 6B ist in dem Gehäuseteil 3A der Halteeinrichtung 3 ein Arretierelement in Form eines Arretierrades 33 vorgesehen. Das Arretierrad 33 ist an dem Gehäuseteil 3A drehbar gelagert, sodass eine äußere Umfangsfläche des Arretierrades 33 an einem Vorsprung der Stirnseite des federnd gelagerten Arretierblocks 30 zugänglich ist. Eine Reibfläche 12A, 12B des Akkus A kann an dem drehbaren Arretierrad 33 abrollen. Ausgehend von der in der Figur 6A dargestellten Verriegelungsposition des Akkus führt somit das Lösen der Verriegelung für den Akku A und dessen Herausklappen unter Wirkung der Gewichtskraft entlang der Verlagerungsrichtung R1 zu einer Drehung des Arretierrades 33 an dem Gehäuseteil 3A der Verriegelungseinrichtung 3 um eine Drehrichtung R3 (vorliegend im Uhrzeigersinn). Die Drehbarkeit des Arretierrades 33 ist hierbei auf ein definiertes Maß und damit auf einen definierten Drehwinkelbereich begrenzt. Wurde das Arretierrad 33 im Kontakt mit einer Reibfläche 12A und/oder 12B des Akkus A um einen maximal zulässigen Drehwinkel gedreht, ist das Arretierrad 33 gegen eine weitere Drehung entlang der Drehrichtung R3 blockiert. Aufgrund der kraftschlüssigen Anlage der akkuseitigen Reibfläche 12A oder 12B an dem Arretierrad 33 ist über die sich ergebende Haftreibungskraft der Akku A gegen eine weitere Verlagerung in der Verlagerungsrichtung R1 unter Wirkung der Gewichtskraft gesperrt. Der Akku A nimmt somit eine Entnahmeposition ein, in der der Akku A über das Arretierrad 33 arretiert ist.

Für die Entnahme des Akkus A muss nun lediglich der Akku A erneut in Verlagerungsrichtung R1 und damit einer hiermit zusammenfallenden Entnahmerichtung zum Lösen des Kraftschlusses von dem Unterrohr RT abgezogen werden.

Wird umgekehrt der Akku A wieder an dem Unterrohr RT platziert, kann der Akku A in umgekehrter Reihenfolge aus der abgeklappten Entnahmeposition in die Verriegelungsposition zurück verschwenkt respektive geklappt werden. Hierbei wird das Arretierrad 33 im Kontakt mit einer Reibfläche 12A oder 12B des Akkus A wieder zurück gedreht (mithin entgegen dem Uhrzeigersinn).

### Bezugszeichenliste

- 1: Akkukappe
- 10: Stirnfläche
- 11A, 11B: Aussparung
- 12A, 12B: Reibfläche (Gegenfläche)
- 2': Steckverbinder
- 3: Verriegelungseinrichtung
- 30: Arretierblock (Arretierelement)
- 300: Reibfläche
- 31: Druckfeder (Federelement)
- 32: Spannschraube (Spannelement)
- 33: Arretierrad (Arretierelement)
- 3A: Gehäuseteil
- A, A': Akku (Energieversorgungseinheit)
- B: Betätigungsgriff
- E: Elektromotor
- K: Kettenblatt
- R: Fahrradrahmen
- R1: Verlagerungsrichtung
- R2: Wirkrichtung
- R3: Drehrichtung
- RT: Unterrohr (Halteteil)
- T: Tretkurbel

## Patentansprüche

1. Verriegelungssystem für ein Fahrrad, mit einem Halteteil (RT), einer Energieversorgungseinheit (A) und einer Verriegelungseinrichtung zur Verriegelung der Energieversorgungseinheit (A) in einer Verriegelungsposition an dem Halteteil (RT), wobei die Verriegelungseinrichtung (3) eingerichtet ist,
- eine Verlagerung der Energieversorgungseinheit (A) an dem Halteteil (RT) aus der Verriegelungsposition in eine Entnahmeposition zu gestatten, in der die Energieversorgungseinheit (A) von dem Halteteil (RT) entnehmbar ist, und
- die aus der Verriegelungsposition verlagerte Energieversorgungseinheit (A) in der Entnahmeposition zu halten,
**dadurch gekennzeichnet, dass**
die Verriegelungseinrichtung (3) wenigstens ein Arretierelement (30, 33) mit wenigstens einer Reibfläche (300) für die Vorgabe der Entnahmeposition aufweist, wobei die wenigstens eine Reibfläche (300) des wenigstens einen Arretierelements (30, 33) für eine Arretierung der Energieversorgungseinheit (A) in der Entnahmeposition durch einen Kraftschluss vorgesehen ist.

2. Verriegelungssystem nach Anspruch 1, **dadurch gekennzeichnet, dass** an der Energieversorgungseinheit (A) wenigstens eine Gegenfläche (12A, 12B) zur kraftschlüssigen Anlage an der wenigstens einen Reibfläche (300) in der Entnahmeposition vorgesehen ist.

3. Verriegelungssystem nach Anspruch 2, **dadurch gekennzeichnet, dass** die wenigstens eine Gegenfläche (12A, 12B) und die wenigstens eine Reibfläche (300) derart zueinander angeordnet und ausgebildet sind, dass die Gegenfläche (12A, 12B) zumindest teilweise an der Reibfläche (300) entlang geführt wird, wenn die Energieversorgungseinheit (A) aus der Verriegelungsposition in die Entnahmeposition verlagert wird.

4. Verriegelungssystem nach Anspruch 3, **dadurch gekennzeichnet, dass** über einen Kontakt zwischen der wenigstens einen Reibfläche (300) und der wenigstens einen Gegenfläche (12A, 12B) in der Entnahmeposition eine Haftreibungskraft aufbringbar ist, die größer ist als eine auf die Energieversorgungseinheit (A) wirkende Gewichtskraft, unter deren Wirkung die Energieversorgungseinheit (A) bei durch die Verriegelungseinrichtung (3) gelöster Verriegelung aus der Verriegelungsposition in die Entnahmeposition verlagerbar ist.

5. Verriegelungssystem nach Anspruch 4, **dadurch gekennzeichnet, dass** die Größe der Haftreibungskraft derart vorgegeben ist, dass eine Person durch eine manuell aufgebrachte Entnahmekraft auf die Energieversorgungseinheit (A) den Kraftschluss zwischen der wenigstens einen Reibfläche (300) und der wenigstens einen Gegenfläche (12A, 12B) lösen und die Energieversorgungseinheit (A) zum Entfernen von dem Halteteil (RT) verlagern kann.

6. Verriegelungssystem nach Anspruch 5, **dadurch gekennzeichnet, dass** die wenigstens eine Gegenfläche (12A, 12B) und die wenigstens eine Reibfläche (300) derart zueinander angeordnet und ausgebildet sind, dass die in der Entnahmeposition aufgebrachte Haftreibungskraft durch eine Entnahmekraft überwindbar ist, die in diejenige Richtung (R1) wirkt, entlang der die Energieversorgungseinheit (A) aus der Verriegelungsposition in die Entnahmeposition verlagerbar ist.

7. Verriegelungssystem nach einem der Ansprüche 4 bis 6, **dadurch gekennzeichnet, dass** die wenigstens eine Gegenfläche (12A, 12B) und die wenigstens eine Reibfläche (300) derart zueinander angeordnet und ausgebildet sind, dass eine durch den Kontakt zwischen der wenigstens einen Reibfläche (300) und der wenigstens einen Gegenfläche (12A, 12B) erzeugte Reibung zumindest über einen Teil des mit einer Verlagerungsbewegung der Energieversorgungseinheit (A) überbrückten Verlagerungswegs vor dem Erreichen der Entnahmeposition ansteigt.

8. Verriegelungssystem nach Anspruch 7, **dadurch gekennzeichnet, dass** für die Erzeugung einer ansteigenden Reibung eine rampenartig verlaufende Kontur der Reibfläche (300) und/oder der Gegenfläche (12A, 12B) vorgesehen ist.

9. Verriegelungssystem nach einem der Ansprüche 2 bis 6, **dadurch gekennzeichnet, dass** das Arretierelement (33) drehbar gelagert ist und die Gegenfläche (12A, 12B) der Energieversorgungseinheit (A) unter Drehung des Arretierelements (33) an wenigstens einem Teil der Reibfläche (300) abrollbar ist, wenn die Energieversorgungseinheit (A) in Richtung der Entnahmeposition verlagert wird, insbesondere wobei das Arretierelement (33) zur Vorgabe der Entnahmeposition in einer bestimmten Drehlage gegen eine weitere Drehung blockiert ist.

10. Verriegelungssystem nach einem der vorhergehenden Ansprüche, **dadurch gekennzeichnet, dass** das Arretierelement (30, 33) in Richtung der in der Verriegelungsposition und/oder in der Entnahmeposition vorliegenden Energieversorgungseinheit (A) elastisch vorgespannt ist.

11. Verriegelungssystem nach Anspruch 10, **dadurch gekennzeichnet, dass** über das Arretierelement (30, 33) auf die in der Verriegelungsposition vorliegende Energieversorgungseinheit (A) eine Spannkraft ausgeübt wird.

12. Verriegelungssystem nach Anspruch 10 oder 11, **dadurch gekennzeichnet, dass** eine Vorspannung des Arretierelements (30, 33) einstellbar ist.

13. Verriegelungssystem nach Anspruch 4 und nach Anspruch 12, **dadurch gekennzeichnet, dass** über die Einstellung der Vorspannung die Größe der Haftreibungskraft in der Entnahmeposition einstellbar ist, insbesondere nachjustierbar ist.

14. Fahrradrahmen für ein Fahrrad, insbesondere ein Elektrofahrrad, mit einem Verriegelungssystem nach einem der vorhergehenden Ansprüche.

15. Elektrofahrrad mit einem Verriegelungssystem nach einem der Ansprüche 1 bis 13.

## Claims

1. A locking system for a bicycle, comprising a holding part (RT), an energy supply unit (A) and a locking device for locking the energy supply unit (A) in a locking position at the holding part (RT), wherein the locking device (3) is adapted
- to permit a displacement of the energy supply unit (A) at the holding part (RT) from the locking position into a removal position in which the energy supply unit (A) can be removed from the holding part (RT), and
- to hold the energy supply unit (A) displaced from the locking position in the removal position,
**characterized in that**
the locking device (3) includes at least one arresting element (30, 33) with at least one friction surface (300) for specifying the removal position, wherein the at least one friction surface (300) of the at least one arresting element (30, 33) is provided for an arrestment of the energy supply unit (A) in the removal position by a non-positive connection.

2. The locking system according to claim 1, **characterized in that** on the energy supply unit (A) at least one counter-surface (12A, 12B) is provided for non-positive abutment against the at least one friction surface (300) in the removal position.

3. The locking system according to claim 2, **characterized in that** the at least one counter-surface (12A, 12B) and the at least one friction surface (300) are arranged and formed relative to each other in such a way that the counter-surface (12A, 12B) is at least partly guided along the friction surface (300) when the energy supply unit (A) is displaced from the locking position into the removal position.

4. The locking system according to claim 3, **characterized in that** via a contact between the at least one friction surface (300) and the at least one counter-surface (12A, 12B) a static friction force can be applied in the removal position, which is greater than a weight force acting on the energy supply unit (A), by action of which the energy supply unit (A) can be displaced from the locking position into the removal position when locking is released by the locking device (3).

5. The locking system according to claim 4, **characterized in that** the magnitude of the static friction force is specified in such a way that by a removal force manually applied onto the energy supply unit (A) a person can release the non-positive connection between the at least one friction surface (300) and the at least one counter-surface (12A, 12B) and can displace the energy supply unit (A) for removal from the holding part (RT).

6. The locking system according to claim 5, **characterized in that** the at least one counter-surface (12A, 12B) and the at least one friction surface (300) are arranged and formed relative to each other in such a way that the static friction force applied in the removal position can be overcome by a removal force which acts **in that** direction (R1) along which the energy supply unit (A) can be displaced from the locking position into the removal position.

7. The locking system according to any of claims 4 to 6, **characterized in that** the at least one counter-surface (12A, 12B) and the at least one friction surface (300) are arranged and formed relative to each other in such a way that a friction generated by the contact between the at least one friction surface (300) and the at least one counter-surface (12A, 12B) rises at least over a part of the displacement path covered with a displacing movement of the energy supply unit (A) before reaching the removal position.

8. The locking system according to claim 7, **characterized in that** for generating a rising friction there is provided a ramp-like contour of the friction surface (300) and/or of the counter-surface (12A, 12B).

9. The locking system according to any of claims 2 to 6, **characterized in that** the arresting element (33) is rotatably mounted and the counter-surface (12A, 12B) of the energy supply unit (A) can be rolled off on at least part of the friction surface (300) by rotating the arresting element (33) when the energy supply unit (A) is displaced in the direction of the removal position, in particular wherein the arresting element (33) is blocked against a further rotation in a particular rotary position for specifying the removal position.

10. The locking system according to any of the preceding claims, **characterized in that** the arresting element (30, 33) is elastically pretensioned in the direction of the energy supply unit (A) present in the locking position and/or in the removal position.

11. The locking system according to claim 10, **characterized in that** via the arresting element (30, 33) a clamping force is exerted on the energy supply unit (A) present in the locking position.

12. The locking system according to claim 10 or 11, **characterized in that** a pretension of the arresting element (30, 33) can be set.

13. The locking system according to claim 4 and according to claim 12, **characterized in that** via the setting of the pretension the magnitude of the static friction force in the removal position can be set, in particular be readjusted.

14. A bicycle frame for a bicycle, in particular an electric bicycle, comprising a locking system according to any of the preceding claims.

15. An electric bicycle comprising a locking system according to any of claims 1 to 13.

## Revendications

1. Système de verrouillage pour une bicyclette, comprenant une partie de retenue (RT), une unité d'alimentation en énergie (A) et un dispositif de verrouillage pour verrouiller l'unité d'alimentation en énergie (A) dans une position de verrouillage sur la partie de retenue (RT), le dispositif de verrouillage (3) étant adapté,
- pour permettre un déplacement de l'unité d'alimentation en énergie (A) sur la partie de retenue (RT) de la position de verrouillage dans une position de prélèvement dans laquelle l'unité d'alimentation en énergie (A) peut être retirée de la partie de retenue (RT), et
- pour maintenir l'unité d'alimentation en énergie (A) déplacée de la position de verrouillage dans la position de prélèvement,
**caractérisé en ce que**
le dispositif de verrouillage (3) présente au moins un élément d'arrêt (30, 33) avec au moins une surface de friction (300) pour prédéfinir la position de prélèvement, ladite au moins une surface de friction (300) de l'au moins un élément d'arrêt (30, 33) étant prévue pour un blocage de l'unité d'alimentation en énergie (A) dans la position de prélèvement par une adhérence.

2. Système de verrouillage selon la revendication 1, **caractérisé en ce qu'**il est prévu sur l'unité d'alimentation en énergie (A) au moins une contre-surface (12A, 12B) destinée à s'appliquer par adhérence contre ladite au moins une surface de friction (300) dans la position de prélèvement.

3. Système de verrouillage selon la revendication 2, **caractérisé en ce que** ladite au moins une contre-surface (12A, 12B) et ladite au moins une surface de friction (300) sont agencées et configurées l'une par rapport à l'autre de telle sorte que la contre-surface (12A, 12B) est guidée au moins partiellement le long de la surface de friction (300) lorsque l'unité d'alimentation en énergie (A) est déplacée de la position de verrouillage dans la position de prélèvement.

4. Système de verrouillage selon la revendication 3, **caractérisé en ce que**, par l'intermédiaire d'un contact entre ladite au moins une surface de friction (300) et ladite au moins une contre-surface (12A, 12B), on peut appliquer dans la position de prélèvement une force de friction adhésive qui est supérieure à une force de poids agissant sur l'unité d'alimentation en énergie (A), sous l'effet de laquelle l'unité d'alimentation en énergie (A) peut être déplacée de la position de verrouillage dans la position de prélèvement lorsque le verrouillage est libéré par le dispositif de verrouillage (3).

5. Système de verrouillage selon la revendication 4, **caractérisé en ce que** la valeur de la force de friction adhésive est prédéterminée de telle sorte qu'une personne peut, par une force de prélèvement appliquée manuellement sur l'unité d'alimentation en énergie (A), rompre l'adhérence entre ladite au moins une surface de friction (300) et ladite au moins une contre-surface (12A, 12B) et déplacer l'unité d'alimentation en énergie (A) pour l'enlever de la partie de retenue (RT).

6. Système de verrouillage selon la revendication 5, **caractérisé en ce que** ladite au moins une contre-surface (12A, 12B) et ladite au moins une surface de friction (300) sont agencées et configurées l'une par rapport à l'autre de telle sorte que la force de friction adhésive appliquée dans la position de prélèvement peut être surmontée par une force de prélèvement qui agit dans la direction (R1) le long de laquelle l'unité d'alimentation en énergie (A) peut être déplacée de la position de verrouillage dans la position de prélèvement.

7. Système de verrouillage selon l'une quelconque des revendications 4 à 6, **caractérisé en ce que** ladite au moins une contre-surface (12A, 12B) et ladite au moins une surface de friction (300) sont agencées et configurées l'une par rapport à l'autre de telle sorte qu'une friction générée par le contact entre ladite au moins une surface de friction (300) et ladite au moins une contre-surface (12A, 12B) augmente au moins sur une partie de la distance de déplacement couverte par un mouvement de déplacement de l'unité d'alimentation en énergie (A) avant d'atteindre la position de prélèvement.

8. Système de verrouillage selon la revendication 7, **caractérisé en ce que**, pour générer une friction croissante, il est prévu un contour de la surface de friction (300) et/ou de la contre-surface (12A, 12B) qui s'étend en forme de rampe.

9. Système de verrouillage selon l'une quelconque des revendications 2 à 6, **caractérisé en ce que** l'élément d'arrêt (33) est monté rotatif et la contre-surface (12A, 12B) de l'unité d'alimentation en énergie (A) peut rouler sur au moins une partie de la surface de friction (300) en faisant tourner l'élément d'arrêt (33) lorsque l'unité d'alimentation en énergie (A) est déplacée en direction de la position de prélèvement, en particulier l'élément d'arrêt (33) étant bloqué dans une certaine position de rotation pour prédéfinir la position de prélèvement et empêcher toute autre rotation.

10. Système de verrouillage selon l'une quelconque des revendications précédentes, **caractérisé en ce que** l'élément d'arrêt (30, 33) est précontraint élastiquement en direction de l'unité d'alimentation en énergie (A) présente dans la position de verrouillage et/ou dans la position de prélèvement.

11. Système de verrouillage selon la revendication 10, **caractérisé en ce qu'**une force de serrage est exercée sur l'unité d'alimentation en énergie (A) présente dans la position de verrouillage par l'intermédiaire de l'élément d'arrêt (30, 33).

12. Système de verrouillage selon la revendication 10 ou 11, **caractérisé en ce qu'**une précontrainte de l'élément d'arrêt (30, 33) est réglable.

13. Système de verrouillage selon la revendication 4 et selon la revendication 12, **caractérisé en ce que** le réglage de la précontrainte permet de régler, en particulier de réajuster, la valeur de la force de friction adhésive dans la position de prélèvement.

14. Cadre de bicyclette pour une bicyclette, en particulier une bicyclette électrique, comprenant un système de verrouillage selon l'une quelconque des revendications précédentes.

15. Bicyclette électrique comprenant un système de verrouillage selon l'une quelconque des revendications 1 à 13.
